(19) Europäisches Patentamt
European Patent Office
Office européen des brevets

(11) **EP 3 545 007 B1**

(12) **EUROPEAN PATENT SPECIFICATION**

(45) Date of publication and mention
of the grant of the patent:
**19.10.2022 Bulletin 2022/42**

(21) Application number: **17794301.6**

(22) Date of filing: **30.10.2017**

(51) International Patent Classification (IPC):
**C08F 2/00** *(2006.01)*     **C08L 23/06** *(2006.01)*

(52) Cooperative Patent Classification (CPC):
(C-Sets available)
**C08L 23/06;** C08L 2205/025; C08L 2308/00 (Cont.)

(86) International application number:
**PCT/EP2017/077798**

(87) International publication number:
**WO 2018/095702 (31.05.2018 Gazette 2018/22)**

(54) **POLYETHYLENE COMPOSITION FOR BLOW MOLDING HAVING HIGH STRESS CRACKING RESISTANCE**

POLYETHYLENZUSAMMENSETZUNG ZUM BLASFORMEN MIT HOHER SPANNUNGSRISSBESTÄNDIGKEIT

COMPOSITION DE POLYÉTHYLÈNE POUR MOULAGE PAR SOUFFLAGE RÉSISTANT À LA FISSURATION SOUS CONTRAINTE ÉLEVÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2016 EP 16200492**

(43) Date of publication of application:
**02.10.2019 Bulletin 2019/40**

(73) Proprietor: **Basell Polyolefine GmbH
50389 Wesseling (DE)**

(72) Inventors:
• **DÖTSCH, Diana
55545 Bad Kreuznach (DE)**
• **MARCZINKE, Bernd Lothar
65929 Frankfurt (DE)**
• **MEIER, Gerhardus
60320 Frankfurt/M (DE)**
• **SCHUELLER, Ulf
64331 Weiterstadt (DE)**
• **DAMM, Elke
61118 Bad Vilbel (DE)**
• **FIBLA, Claudio
61462 Koenigstein im Taunus (DE)**

(74) Representative: **LyondellBasell
c/o Basell Poliolefine Italia
Intellectual Property
P.le Donegani 12
44122 Ferrara (IT)**

(56) References cited:
**EP-A1- 2 818 508         EP-A1- 2 818 509
WO-A1-2016/075165    US-A1- 2014 243 475**

(52) Cooperative Patent Classification (CPC): (Cont.)

    C-Sets
    **C08F 210/16, C08F 2/001;**
    **C08F 210/16, C08F 4/6465;**
    **C08F 210/16, C08F 4/6492;**
    **C08F 210/16, C08F 4/6494;**
    **C08F 210/16, C08F 4/651;**
    **C08L 23/06, C08L 23/0815;**
    C08F 110/02, C08F 2500/07, C08F 2500/12;
    C08F 210/16, C08F 210/14, C08F 2500/12,
    C08F 2500/04, C08F 2500/09, C08F 2500/26,

C08F 2500/17

**Description**

FIELD OF THE INVENTION

The present disclosure relates to a polyethylene composition which is suitable for producing small articles by blow molding.

BACKGROUND OF THE INVENTION

Examples of prior art compositions suited for the said use are disclosed in WO2009003627, US20140243475 and WO2014206854.

It has now been found that by properly selecting the molecular structure and rheological behavior of the composition, a particularly high Environmental Stress Cracking Resistance (ESCR) is achieved in combination with an extremely smooth surface of the final article, with reduced gel content.

SUMMARY OF THE INVENTION

Thus present disclosure provides a polyethylene composition having the following features:

1) density from 0.948 to 0.952 g/cm$^3$, preferably 0.948 to 0.951 g/cm$^3$, determined according to ISO 1183-1 at 23°C;
2) ratio MIF/MIP from 12 to 25 in particular from 15 to 22, where MIF is the melt flow index at 190°C with a load of 21.60 kg, and MIP is the melt flow index at 190°C with a load of 5 kg, both determined according to ISO 1133;
3) MIF from 18 to 40 g/10 min., preferably from 20 to 40 g/10 min.;
4) Mz equal to or greater than 1,200,000 g/mol, in particular from 1,200,000 to 2,000,000 g/mol, where Mz is the z-average molecular weight, measured by GPC;
5) $\eta_{0.02}$ from 35,000 to 55,000 Pa.s, preferably from 38,000 to 55,000 Pa.s., more preferably from 40,000 to 50,000 Pa.s.;wherein $\eta_{0.02}$ is the complex shear viscosity at an angular frequency of 0.02 rad/s, measured with dynamic oscillatory shear in a plate-plate rotational rheometer at a temperature of 190°C;
6) long-chain branching index, LCBI, equal to or greater than 0.55, preferably equal to or greater than 0.60, wherein LCBI is the ratio of the measured mean-square radius of gyration $R_g$, measured by GPC-MALLS, to the mean-square radius of gyration for a linear PE having the same molecular weight;
7) ratio ($\eta_{0.02}$/1000)/ LCBI, which is between $\eta_{0.02}$ divided by 1000 and LCBI, from 55 to 75, preferably from 55 to 72.

BRIEF DESCRIPTION OF THE DRAWINGS

These and other features, aspects, and advantages of the present disclosure will become better understood with reference to the following description and appended claims, and accompanying drawing figure where:
The drawing is an illustrative embodiment of a simplified process-flow diagram of two serially connected gas-phase reactors suitable for use in accordance with various embodiments of ethylene polymerization processes disclosed herein to produce various embodiments of the polyethylene compositions disclosed herein.
It should be understood that the various embodiments are not limited to the arrangements and instrumentality shown in the drawing figure.

DETAILED DESCRIPTION OF THE INVENTION

The expression "polyethylene composition" is intended to embrace, as alternatives, both a single ethylene polymer and an ethylene polymer composition, in particular a composition of two or more ethylene polymer components, preferably with different molecular weights, such composition being also called "bimodal" or "multimodal" polymer in the relevant art.
Typically the present polyethylene composition consists of or comprises one or more ethylene copolymers.
All the features herein defined, comprising the previously defined features 1) to 7), are referred to the said ethylene polymer or ethylene polymer composition. The addition of other components, like the additives normally employed in the art, can modify one or more of said features.
The ratio MIF/MIP provides a rheological measure of molecular weight distribution.
Another measure of the molecular weight distribution is provided by the ratio $M_w/M_n$, where $M_w$ is the weight average molecular weight and $M_n$ is the number average molecular weight, measured by GPC (Gel Permeation Chromatography), as explained in the examples.
Preferred $M_w/M_n$ values for the present polyethylene composition range from 15 to 30, in particular from 15 to 25.

The $M_w$ values are preferably from 150,000 g/mol to 450,000 g/mol, in particular from 150,000 g/mol to 350,000 g/mol.

Preferred ranges of LCBI values are:

- from 0.55 to 0.85; or
- from 0.60 to 0.85; or
- from 0.55 to 0.70; or
- from 0.60 to 0.70.

Moreover the present polyethylene composition has preferably at least one of the following additional features.

- comonomer content equal to or less than 2% by weight, in particular from 0.5 to 2% by weight, with respect to the total weight of the composition;
- HMWcopo index from 1 to 15, in particular from 1 to 10 or from 1 to 5.

The HMWcopo index is determined according to the following formula:

$$HMWcopo = (\eta_{0.02} \text{ x } t_{maxDSC})/(10^{\wedge}5)$$

where $\eta_{0.02}$ is the complex viscosity of the melt in Pa.s, measured at a temperature of 190°C, in a parallel-plate (or so-called plate-plate) rheometer under dynamic oscillatory shear mode with an applied angular frequency of 0.02 rad/s; the $t_{maxDSC}$ is the time, in minutes, required to reach the maximum value of heat flow (in mW) of crystallization (time at which the maximum crystallization rate is achieved, equivalent to the t1/2 crystallization half-time) at a temperature of 124 °C under quiescent conditions, measured in isothermal mode in a differential scanning calorimetry apparatus, DSC; LCBI is the ratio of the measured mean-square radius of gyration $R_g$, measured by GPC-MALLS, to the mean-square radius of gyration for a linear PE having the same molecular weight at a mol. weight of 1,000,000 g/mol.

The comonomer or comonomers present in the ethylene copolymers are generally selected from olefins having formula $CH_2$=CHR wherein R is an alkyl radical, linear or branched, having from 1 to 10 carbon atoms.

Specific examples are propylene, butene-1, pentene-1, 4-methylpentene-1, hexene-1, octene-1 and decene-1. A particularly preferred comonomer is hexene-1.

In particular, in a preferred embodiment, the present composition comprises:

A) 30 - 70% by weight, preferably 40 - 60% by weight of an ethylene homopolymer or copolymer (the homopolymer being preferred) with density equal to or greater than 0.960 g/cm³ and melt flow index MIE at 190°C with a load of 2.16 kg, according to ISO 1133, of 40 g/10 min. or higher, preferably of 50 g/10 min. or higher;
B) 30 - 70% by weight, preferably 40 - 60% by weight of an ethylene copolymer having a MIE value lower than the MIE value of A), preferably lower than 0.5 g/10 min.

The above percent amounts are given with respect to the total weight of A) + B).

Specific MIE ranges for component A) are.

- 40 to 150 g/10 min.; or
- 50 to 150 g/10 min.; or
- 40 to 100 g/10 min.; or
- 50 to 100 g/10 min.

As previously said, the present polyethylene composition can be advantageously used for producing blow molded articles.

In fact it is preferably characterized by the following properties.

- Environmental stress crack resistance measured by FNCT 4 MPa/80°C higher than 8h;
- Swell ratio higher than 170%;
- Charpy aCN Impact (T = -30°C) of 3 kJ/m² or higher;
- Substantial absence of gels having gel diameter of higher than 700 $\mu$m.

The details of the test methods are given in the examples.

The blow-molding process is generally carried out by first plastifying the polyethylene composition in an extruder at temperatures in the range from 180 to 250°C and then extruding it through a die into a blow mold, where it is cooled.

While no necessary limitation is known to exist in principle on the kind of polymerization processes and catalysts to be used, it has been found that the present polyethylene composition can be prepared by a gas phase polymerization process in the presence of a Ziegler-Natta catalyst.

A Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound supported on $MgCl_2$.

Preferred organometallic compounds are the organo-Al compounds.

Thus in a preferred embodiment, the present polyethylene composition is obtainable by using a Ziegler-Natta polymerization catalyst, more preferably a Ziegler-Natta catalyst supported on $MgCl_2$, even more preferably a Ziegler-Natta catalyst comprising the product of reaction of:

a) a solid catalyst component comprising a Ti compound and an electron donor compound ED supported on $MgCl_2$;
b) an organo-Al compound; and optionally
c) an external electron donor compound $ED_{ext}$.

Preferably in component a) the ED/Ti molar ratio ranges from 1.5 to 3.5 and the Mg/Ti molar ratio is higher than 5.5, in particular from 6 to 80.

Among suitable titanium compounds are the tetrahalides or the compounds of formula $TiX_n(OR^1)_{4-n}$, where $0 \leq n \leq 3$, X is halogen, preferably chlorine, and $R^1$ is $C_1$-$C_{10}$ hydrocarbon group. The titanium tetrachloride is the preferred compound.

The ED compound is generally selected from alcohol, ketones, amines, amides, nitriles, alkoxysilanes, aliphatic ethers, and esters of aliphatic carboxylic acids.

Preferably the ED compound is selected among amides, esters and alkoxysilanes.

Excellent results have been obtained with the use of esters which are thus particularly preferred as ED compound. Specific examples of esters are the alkyl esters of C1-C20 aliphatic carboxylic acids and in particular C1-C8 alkyl esters of aliphatic mono carboxylic acids such as ethylacetate, methyl formiate, ethylformiate, methylacetate, propylacetate, i-propylacetate, n-butylacetate, i-butylacetate. Moreover, are also preferred the aliphatic ethers and particularly the C2-C20 aliphatic ethers, such as tetrahydrofurane (THF) or dioxane.

In the said solid catalyst component the $MgCl_2$ is the basic support, even if minor amount of additional carriers can be used. The $MgCl_2$ can be used as such or obtained from Mg compounds used as precursors that can be transformed into $MgCl_2$ by the reaction with halogenating compounds. Particularly preferred is the use of $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the ASTM-card reference of the spectrum of the non-active halide is diminished in intensity and broadened. In the X-ray spectra of preferred magnesium dihalides in active form said most intense line is diminished in intensity and replaced by a halo whose maximum intensity is displaced towards lower angles relative to that of the most intense line.

Particularly suitable for the preparation of the polyethylene composition of the present invention are the catalysts wherein the solid catalyst component a) is obtained by first contacting the titanium compound with the $MgCl_2$, or a precursor Mg compound, optionally in the presence of an inert medium, thus preparing an intermediate product a') containing a titanium compound supported on $MgCl_2$, which intermediate product a') is then contacted with the ED compound which is added to the reaction mixture alone or in a mixture with other compounds in which it represents the main component, optionally in the presence of an inert medium.

With the term "main component" we intend that the said ED compound must be the main component in terms of molar amount, with respect to the other possible compounds excluded inert solvents or diluents used to handle the contact mixture. The ED treated product can then be subject to washings with the proper solvents in order to recover the final product. If needed, the treatment with the ED compound desired can be repeated one or more times.

As previously mentioned, a precursor of $MgCl_2$ can be used as starting essential Mg compound. This can be selected for example among Mg compound of formula $MgR'_2$ where the R' groups can be independently C1-C20 hydrocarbon groups optionally substituted, OR groups, OCOR groups, chlorine, in which R is a C1-C20 hydrocarbon groups optionally substituted, with the obvious proviso that the R' groups are not simultaneously chlorine. Also suitable as precursors are the Lewis adducts between $MgCl_2$ and suitable Lewis bases. A particular and preferred class being constituted by the $MgCl_2 (R"OH)_m$ adducts in which R" groups are C1-C20 hydrocarbon groups, preferably C1-C10 alkyl groups, and m is from 0.1 to 6, preferably from 0.5 to 3 and more preferably from 0.5 to 2. Adducts of this type can generally be obtained by mixing alcohol and $MgCl_2$ in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034.

Particularly interesting are the $MgCl_2 \cdot (EtOH)_m$ adducts in which m is from 0.15 to 1.7 obtained subjecting the adducts with a higher alcohol content to a thermal dealcoholation process carried out in nitrogen flow at temperatures comprised between 50 and 150°C until the alcohol content is reduced to the above value. A process of this type is described in EP 395083.

The dealcoholation can also be carried out chemically by contacting the adduct with compounds capable to react with the alcohol groups.

Generally these dealcoholated adducts are also characterized by a porosity (measured by mercury method ) due to pores with radius up to 0.1 $\mu$m ranging from 0.15 to 2.5 $cm^3$/g preferably from 0.25 to 1.5 $cm^3$/g.

These adducts are reacted with the $TiX_n(OR^1)_{4-n}$ compound (or possibly mixtures thereof) mentioned above which is preferably titanium tetrachloride. The reaction with the Ti compound can be carried out by suspending the adduct in $TiCl_4$ (generally cold). The mixture is heated up to temperatures ranging from 80-130°C and kept at this temperature for 0.5-2 hours. The treatment with the titanium compound can be carried out one or more times. Preferably it is repeated twice. It can also be carried out in the presence of an electron donor compound as those mentioned above. At the end of the process the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated hydrocarbons.

As mentioned above, the intermediate product is then brought into contact with the ED compound under conditions able to fix on the solid an effective amount of donor. Due to the high versatility of this method, the amount of donor used can widely vary. As an example, it can be used in molar ratio with respect to the Ti content in the intermediate product ranging from 0.5 to 20 and preferably from 1 to 10. Although not strictly required the contact is typically carried out in a liquid medium such as a liquid hydrocarbon. The temperature at which the contact takes place can vary depending on the nature of the reagents. Generally it is comprised in the range from -10° to 150°C and preferably from 0° to 120°C. It is plane that temperatures causing the decomposition or degradation of any specific reagents should be avoided even if they fall within the generally suitable range. Also the time of the treatment can vary in dependence of other conditions such as nature of the reagents, temperature, concentration etc. As a general indication this contact step can last from 10 minutes to 10 hours more frequently from 0.5 to 5 hours. If desired, in order to further increase the final donor content, this step can be repeated one or more times. At the end of this step the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated or oxygenated hydrocarbons.

As previously mentioned, the said solid catalyst component is converted into catalysts for the polymerization of olefins by reacting it, according to known methods, with an organometallic compound of group 1, 2 or 13 of the Periodic Table of elements, in particular with an Al-alkyl compound.

The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as $AlEt_2Cl$ and $Al_2Et_3Cl_3$ optionally in mixture with said trialkyl aluminum compounds.

The external electron donor compound $ED_{ext}$ optionally used to prepare the said Ziegler-Natta catalysts can be equal to or different from the ED used in the solid catalyst component a). Preferably it is selected from the group consisting of ethers, esters, amines, ketones, nitriles, silanes and their mixtures. In particular it can advantageously be selected from the C2-C20 aliphatic ethers and in particulars cyclic ethers preferably having 3-5 carbon atoms such as tetrahydrofurane and dioxane.

The catalyst can be prepolymerized according to known techniques, by producing reduced amounts of polyolefin, preferably polypropylene or polyethylene. The prepolymerization can be carried out before adding the electron donor compound ED, thus by subjecting to prepolymerization the intermediate product a'). Alternatively it is possible to subject to prepolymerization the solid catalyst component a).

The amount of prepolymer produced can be up to 500 g per g of intermediate product a') or of component a). Preferably it is from 0.5 to 20 g per g of intermediate product a').

The prepolymerization is carried out with the use of a suitable cocatalyst such as organoaluminum compounds that can also be used in combination with an external electron donor compound as discussed above.

It can be carried out at temperatures from 0 to 80°C, preferably from 5 to 70°C, in the liquid or gas phase.

The catalysts wherein the intermediate product a') is subjected to prepolymerization as described above are particularly preferred.

It has been found that by using the above described polymerization catalyst, the polyethylene composition of the present invention can be prepared in a process comprising the following steps, in any mutual order:

> a) polymerizing ethylene, optionally together with one or more comonomers, in a gas-phase reactor in the presence of hydrogen;
>
> b) copolymerizing ethylene with one or more comonomers in another gas-phase reactor in the presence of an amount of hydrogen less than step a);

where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones.

In the first polymerization zone (riser), fast fluidization conditions are established by feeding a gas mixture comprising one or more olefins (ethylene and comonomers) at a velocity higher than the transport velocity of the polymer particles. The velocity of said gas mixture is preferably comprised between 0.5 and 15 m/s, more preferably between 0.8 and 5 m/s. The terms "transport velocity" and "fast fluidization conditions" are well known in the art; for a definition thereof, see, for example, "D. Geldart, Gas Fluidisation Technology, page 155 et seq. , J. Wiley & Sons Ltd. , 1986".

In the second polymerization zone (downcomer), the polymer particles flow under the action of gravity in a densified form, so that high values of density of the solid are reached (mass of polymer per volume of reactor), which approach the bulk density of the polymer.

In other words, the polymer flows vertically down through the downcomer in a plug flow (packed flow mode), so that only small quantities of gas are entrained between the polymer particles.

Such process allows to obtain from step a) an ethylene polymer with a molecular weight lower than the ethylene copolymer obtained from step b).

Preferably, a copolymerization of ethylene to produce a relatively low molecular weight ethylene copolymer (step a) is performed upstream the copolymerization of ethylene to produce a relatively high molecular weight ethylene copolymer (step b). To this aim, in step a) a gaseous mixture comprising ethylene, hydrogen, comonomer and an inert gas is fed to a first gas-phase reactor, preferably a gas-phase fluidized bed reactor. The polymerization is carried out in the presence of the previously described Ziegler-Natta catalyst.

Hydrogen is fed in an amount depending on the specific catalyst used and, in any case, suitable to obtain in step a) an ethylene polymer with a melt flow index MIE of 40 g/10 min. or higher. In order to obtain the above MIE range, in step a) the hydrogen/ethylene molar ratio is indicatively from 1 to 4, the amount of ethylene monomer being from 2 to 20% by volume, preferably from 5 to15% by volume, based on the total volume of gas present in the polymerization reactor. The remaining portion of the feeding mixture is represented by inert gases and one or more comonomers, if any. Inert gases which are necessary to dissipate the heat generated by the polymerization reaction are conveniently selected from nitrogen or saturated hydrocarbons, the most preferred being propane.

The operating temperature in the reactor of step a) is selected between 50 and 120°C, preferably between 65 and 100°C, while the operating pressure is between 0.5 and 10 MPa, preferably between 2.0 and 3.5 MPa.

In a preferred embodiment, the ethylene polymer obtained in step a) represents from 30 to 70% by weight of the total ethylene polymer produced in the overall process, i. e. in the first and second serially connected reactors.

The ethylene polymer coming from step a) and the entrained gas are then passed through a solid/gas separation step, in order to prevent the gaseous mixture coming from the first polymerization reactor from entering the reactor of step b) (second gas-phase polymerization reactor). Said gaseous mixture can be recycled back to the first polymerization reactor, while the separated ethylene polymer is fed to the reactor of step b). A suitable point of feeding of the polymer into the second reactor is on the connecting part between the downcomer and the riser, wherein the solid concentration is particularly low, so that the flow conditions are not negatively affected.

The operating temperature in step b) is in the range of 65 to 95°C, and the pressure is in the range of 1.5 to 4.0 MPa. The second gas-phase reactor is aimed to produce a relatively high molecular weight ethylene copolymer by copolymerizing ethylene with one or more comonomers. Furthermore, in order to broaden the molecular weight distribution of the final ethylene polymer, the reactor of step b) can be conveniently operated by establishing different conditions of monomers and hydrogen concentration within the riser and the downcomer.

To this purpose, in step b) the gas mixture entraining the polymer particles and coming from the riser can be partially or totally prevented from entering the downcomer, so to obtain two different gas composition zones. This can be achieved by feeding a gas and/or a liquid mixture into the downcomer through a line placed at a suitable point of the downcomer, preferably in the upper part thereof. Said gas and/or liquid mixture should have a suitable composition, different from that of the gas mixture present in the riser. The flow of said gas and/or liquid mixture can be regulated so that an upward flow of gas counter-current to the flow of the polymer particles is generated, particularly at the top thereof, acting as a barrier to the gas mixture entrained among the polymer particles coming from the riser. In particular, it is advantageous to feed a mixture with low content of hydrogen in order to produce the higher molecular weight polymer fraction in the downcomer. One or more comonomers can be fed to the downcomer of step b), optionally together with ethylene, propane or other inert gases.

The hydrogen/ethylene molar ratio in the downcomer of step b) is comprised between 0.005 and 0.2, the ethylene concentration being comprised from 0.5 to 15%, preferably 0.5 - 10%, by volume, the comonomer concentration being comprised from 0.05 to 1.5 % by volume, based on the total volume of gas present in said downcomer. The rest is propane or similar inert gases. Since a very low molar concentration of hydrogen is present in the downcomer, by carrying out the present process it is possible to bond a relatively high amount of comonomer to the high molecular weight polyethylene fraction.

The polymer particles coming from the downcomer are reintroduced in the riser of step b).

Since the polymer particles keep reacting and no more comonomer is fed to the riser, the concentration of said comonomer drops to a range of 0.05 to 1.2 % by volume, based on the total volume of gas present in said riser. In practice, the comonomer content is controlled in order to obtain the desired density of the final polyethylene. In the riser of step b) the hydrogen/ethylene molar ratio is in the range of 0.01 to 0.5, the ethylene concentration being comprised between 5 and 20 % by volume based on the total volume of gas present in said riser. The rest is propane or other inert gases.

More details on the above described polymerization process are provided in WO2005019280.

EXAMPLES

The practice and advantages of the various embodiments, compositions and methods as provided herein are disclosed below in the following examples. These Examples are illustrative only, and are not intended to limit the scope of the appended claims in any manner whatsoever.

The following analytical methods are used to characterize the polymer compositions.

## Density

Determined according to ISO 1183-1 at 23°C.

## Complex shear viscosity $\eta_{0.02}$ (eta (0.02))

Measured at angular frequency of 0.02 rad/s and 190°C as follows.

Samples are melt-pressed for 4 min under 200 °C and 200 bar into plates of 1mm thickness. Disc specimens of a diameter of 25 mm are stamped and inserted in the rheometer, which is pre-heated at 190 °C. The measurement can be performed using any rotational rheometer commercially available. Here the Anton Paar MCR 300 is utilized, with a plate-plate geometry. A so-called frequency-sweep is performed (after 4 min of annealing the sample at the measurement temperature) at T = 190 °C, under constant strain-amplitude of 5%, measuring and analyzing the stress response of the material in the range of excitation frequencies $\omega$ from 628 to 0.02 rad/s. The standardized basic software is utilized to calculate the rheological properties, i.e. the storage-modulus, G', the loss-modulus, G", the phase lag $\delta$ (=arctan(G"/G')) and the complex viscosity, $\eta^*$, as a function of the applied frequency, namely $\eta^*(\omega) = [G'(\omega)^2 + G''(\omega)^2]^{1/2}/\omega$. The value of the latter at an applied frequency $\omega$ of 0.02 rad/s is the $\eta_{0.02}$.

## HMWcopo Index

In order to quantify the crystallization and processability potential of the polymer, the HMWcopo (High Molecular Weight Copolymer) Index is used, which is defined by the following formula:

$$\mathrm{HMWcopo} = (\eta_{0.02} \times t_{\mathrm{maxDSC}})/(10^5)$$

It is decreasing with increasing potential of easy processing (low melt-viscosity) and fast crystallization of the polymer. It is also a description and quantification of the amount of high molecular weight fraction, correlating to the melt complex shear viscosity $\eta_{0.02}$ at the frequency of 0.02 rad/s, measured as above described, and the amount of incorporated comonomer which delays the crystallization, as quantified by the maximum heat flow time for quiescent crystallization, $t_{maxDSC}$.

The $t_{maxDSC}$ is determined using a Differential Scanning Calorimetry apparatus, TA Instruments Q2000, under isothermal conditions at a constant temperature of 124 °C. 5-6 mg of sample are weighted and brought into the aluminium DSC pans. The sample is heated with 20K/min up to 200 °C and cooled down also with 20K/min to the test temperature, in order to erase the thermal history. The isothermal test begins immediately after and the time is recorded until crystallization occurs. The time interval until the crystallization heat flow maximum (peak), $t_{maxDSC}$, is determined using the vendor software (TA Instruments). The measurement is repeated 3x times and an average value is then calculated (in min). If no crystallization is observed under these conditions for more than 120 minutes, the value of $t_{maxDSC}$ = 120 minutes is used for further calculations of the HMWcopo index.

The melt viscosity $\eta_{0.02}$ value is multiplied by the $t_{maxDSC}$ value and the product is normalized by a factor of 100000 (10^5).

## Molecular Weight Distribution Determination

The determination of the molar mass distributions and the means Mn, Mw, Mz and Mw/Mn derived therefrom was carried out by high-temperature gel permeation chromatography using a method described in ISO 16014-1, -2, -4, issues of 2003. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.

The solvent was vacuum distilled under Nitrogen and was stabilized with 0.025% by weight of 2,6-di-tert-butyl-4-methylphenol. The flowrate used was 1 ml/min, the injection was 500µl and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany)) in the range from 580g/mol up to 11600000g/mol and additionally with Hexadecane.

The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$= 0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

## Melt flow index

Determined according to ISO 1133 at 190°C with the specified load.

## Long Chain Branching index (LCBI)

The LCB index corresponds to the branching factor g', measured for a molecular weight of $10^6$ g/mol. The branching factor g', which allows determining long-chain branches at high Mw, was measured by Gel Permeation Chromatography (GPC) coupled with Multi-Angle Laser-Light Scattering (MALLS). The radius of gyration for each fraction eluted from the GPC (as described above but with a flow-rate of 0.6 ml/min and a column packed with 30µm particles) is measured by analyzing the light scattering at the different angles with the MALLS (detector Wyatt Dawn EOS, Wyatt Technology, Santa Barbara, Calif.). A laser source of 120mW of wavelength 658nm was used. The specific index of refraction was taken as 0.104 ml/g. Data evaluation was done with Wyatt ASTRA 4.7.3 and CORONA 1.4 software. The LCB Index is determined as described in the following.

The parameter g' is the ratio of the measured mean square radius of gyration to that of a linear polymer having the same molecular weight. Linear molecules show g' of 1, while values less than 1 indicate the presence of LCB. Values of g' as a function of mol. weight, M, were calculated from the equation:

$$g'(M) = <Rg^2>_{sample,M}/<Rg^2>_{linear\ ref.,M}$$

where $<Rg^2>$, M is the root-mean-square radius of gyration for the fraction of mol. weight M.

The radius of gyration for each fraction eluted from the GPC (as described above but with a flow-rate of 0.6 ml/min and a column packed with 30µm particles) is measured by analyzing the light scattering at the different angles. Therefore, from this MALLS setup it is possible to determine mol. weight M and $<Rg^2>_{sample,M}$ and to define a g' at a measured M = $10^6$ g/mol. The $<Rg^2>_{linear\ ref.,M}$ is calculated by the established relation between radius-of-gyration and molecular weight for a linear polymer in solution (Zimm and Stockmayer WH 1949)) and confirmed by measuring a linear PE reference with the same apparatus and methodology described.

The same protocol is described in the following documents. Zimm BH, Stockmayer WH (1949) The dimensions of chain molecules containing branches and rings. J Chem Phys 17 Rubinstein M., Colby RH. (2003), Polymer Physics, Oxford University Press

## Comonomer content

The comonomer content is determined by means of IR in accordance with ASTM D 6248 98, using an FT-IR spectrometer Tensor 27 from Bruker, calibrated with a chemometric model for determining ethyl- or butyl- side-chains in PE for butene or hexene as comonomer, respectively. The result is compared to the estimated comonomer content derived from the mass-balance of the polymerization process and was found to be in agreement.

## Swell ratio

The Swell-ratio of the studied polymers is measured utilizing a capillary rheometer, Göttfert Rheotester2000 and Rheograph25, at T = 190°C, equipped with a commercial 30/2/2/20 die (total length 30 mm, Active length=2 mm, diameter = 2 mm, L/D=2/2 and 20° entrance angle) and an optical device (laser-diod from Göttfert) for measuring the extruded strand thickness. Sample is molten in the capillary barrel at190°C for 6 min and extruded with a piston velocity corresponding to a resulting shear-rate at the die of 1440 s$^{-1}$.

The extrudate is cut (by an automatic cutting device from Göttfert) at a distance of 150 mm from the die-exit, at the moment the piston reaches a position of 96 mm from the die-inlet. The extrudate diameter is measured with the laser-diod at a distance of 78 mm from the die-exit, as a function of time. The maximum value corresponds to the $D_{extrudate}$. The swell-ratio is determined from the calculation:

$$SR = (D_{extrudate}-D_{die})100\%/D_{die}$$

where $D_{die}$ is the corresponding diameter at the die exit, measured with the laser-diod.

## Notched Tensile Impact Test AZK

The tensile-impact strength is determined using ISO 8256:2004 with type 1 double notched specimens according to method A. The test specimens (4 × 10 × 80 mm) are cut from a compression molded sheet which has been prepared according to ISO 1872-2 requirements (average cooling rate 15 K/min and high pressure during cooling phase). The test specimens are notched on two sides with a 45° V-notch. Depth is 2 ± 0.1 mm and curvature radius on notch dip is 1.0 ± 0.05 mm.

The free length between grips is 30 ± 2 mm. Before measurement, all test specimens are conditioned at a constant temperature of -30°C over a period of from 2 to 3 hours. The procedure for measurements of tensile impact strength including energy correction following method A is described in ISO 8256.

## ESCR Belltest

Environmental Stress Crack Resistance (ESCR Bell Telephone Test) is measured according to ASTM D1693:2013 (Method B) and DIN EN ISO 22088-3:2006. 10 rectangular test specimens (38 × 13 × 2 mm) are cut from a compression moulded sheet, which has been prepared according to ISO 1872-2 requirements (average cooling rate 15 K/min and high pressure during cooling phase). They are notched with a razor to a depth of 0.4 mm parallel to the longitudinal axes, centered on one of the broad faces. Afterward they are bent in a U-shape with a special bending device, with the notched side pointing upwards. Within 10 minutes from bending, the U-shaped specimens are put into a glass tube and filled with a 10% vol. aqueous solution of 4-Nonylphenyl-polyethylene glycol (Arkopal N100) at 50°C and sealed with a rubber stopper. The specimen are inspected visually for cracks every hour on the first day, then every day and after 7 days on a weekly basis (every 168 h). The final value obtained is the 50% failure point ($F_{50}$) of the 10 test specimen in the glass tube.

## Environmental stress cracking resistance according to full notch creep test (FNCT)

The environmental stress cracking resistance of polymer samples is determined in accordance to international standard ISO 16770 (FNCT) in aqueous surfactant solution. From the polymer sample a compression moulded 10 mm thick sheet has been prepared. The bars with squared cross section (10×10×100 mm) are notched using a razor blade on four sides perpendicularly to the stress direction. A notching device described in M. Fleissner in Kunststoffe 77 (1987), pp. 45 is used for the sharp notch with a depth of 1.6 mm.

The load applied is calculated from tensile force divided by the initial ligament area. Ligament area is the remaining area = total cross-section area of specimen minus the notch area. For FNCT specimen: $10×10$ mm$^2$ - 4 times of trapezoid notch area = 46.24 mm$^2$ (the remaining cross-section for the failure process / crack propagation). The test specimen is loaded with standard condition suggested by the ISO 16770 with constant load of 4 MPa at 80°C or of 6 MPa at 50°C in a 2% (by weight) water solution of non-ionic surfactant ARKOPAL N100. Time until rupture of test specimen is detected.

## Charpy aCN

Fracture toughness determination by an internal method on test bars measuring $10 × 10 × 80$ mm which had been sawn out of a compression molded sheet with a thickness of 10 mm. Six of these test bars are notched in the center using a razor blade in the notching device mentioned above for FNCT. The notch depth is 1.6 mm. The measurement is carried out substantially in accordance with the Charpy measurement method in accordance with ISO 179-1, with modified test specimens and modified impact geometry (distance between supports).

All test specimens are conditioned to the measurement temperature of -30°C over a period of from 2 to 3 hours. A test specimen is then placed without delay onto the support of a pendulum impact tester in accordance with ISO 179-1. The distance between the supports is 60 mm. The drop of the 2 J hammer is triggered, with the drop angle being set to 160°, the pendulum length to 225 mm and the impact velocity to 2.93 m/s. The fracture toughness value is expressed in kJ/m$^2$ and is given by the quotient of the impact energy consumed and the initial cross-sectional area at the notch, aCN. Only values for complete fracture and hinge fracture can be used here as the basis for a common meaning (see suggestion by ISO 179-1).

## Cast Film Measurement

The Film measurement of gels was carried out on an OCS extruder type ME 202008-V3 with 20 mm screw diameter and a screw length of 25 D with a slit die width of 150 mm. The cast line is equipped with a chill roll and winder (model OCS CR-9). The optical equipment consists of a OSC film surface analyzer camera, model FTA-100 (flash camera system) with a resolution of 26 $\mu$m × 26 $\mu$m. After purging the resin first for 1 hour to stabilize the extrusion conditions, inspection and value recording take place for 30 minutes afterwards. The resin is extruded at 220°C with a take-off speed of ca. 2.7 m/min to generate a film with thickness 50 $\mu$m. The chill roll temperature was 70°C.

The said inspection with the surface analyzer camera provided the total content of gels and the content of gels with diameter of higher than 700 $\mu$m, as reported in Table 1.

## - Process Setup

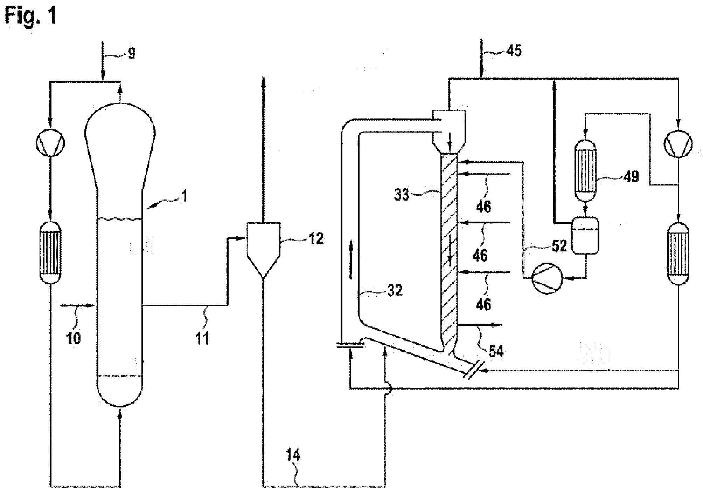

The polymerization process was carried out under continuous conditions in a plant comprising two serially connected gas-phase reactors, as shown in Figure 1.

The polymerization catalyst is prepared as follows.

### Procedure for the preparation of the catalyst component

A magnesium chloride and alcohol adduct containing about 3 mols of alcohol was prepared following the method described in example 2 of USP 4,399,054, but working at 2000 RPM instead of 10000 RPM. The adduct were subject to a thermal treatment, under nitrogen stream, over a temperature range of 50-150 °C until a weight content of 25% of alcohol was reached.

Into a 2 L four-necked round flask, purged with nitrogen, 1 L of TiCl$_4$ was introduced at 0°C. Then, at the same temperature, 70 g of a spherical MgCl$_2$/EtOH adduct containing 25 %wt of ethanol and prepared as described above were added under stirring. The temperature was raised to 140 °C in 2 h and maintained for 120 minutes. Then, the stirring was discontinued, the solid product was allowed to settle and the supernatant liquid was siphoned off. The solid residue was then washed once with heptane at 80°C and five times with hexane at 25°C and dried under vacuum at 30 °C.

Into a 260cm$^3$ glass reactor provided with stirrer, 351.5 cm$^3$ of hexane at 20°C and whilst stirring 7 g of the catalyst component prepared as described above were introduced at 20°C. Keeping constant the internal temperature, 5.6 cm$^3$ of tri-n-octylaluminum (TNOA) in hexane (about 370 g/l) and an amount of cyclohexylmethyl-dimethoxysilane (CMMS) such as to have molar ratio TNOA/CMMS of 50, a were slowly introduced into the reactor and the temperature was brought to 10°C. After 10 minutes stirring, 10 g of propylene were carefully introduced into the reactor at the same temperature during a time of 4 hours. The consumption of propylene in the reactor was monitored and the polymerization was discontinued when a theoretical conversion of 1g of polymer per g of catalyst was deemed to be reached. Then, the whole content was filtered and washed three times with hexane at a temperature of 30°C (50 g/1). After drying the resulting pre-polymerized catalyst (A) was analyzed and found to contain 1.05 g of polypropylene per g of initial catalyst, 2.7%Ti, 8.94%Mg and 0.1%Al.

Internal electron donor supportation on the prepolymerized catalyst

About 42g of the solid prepolymerised catalyst prepared as described above were charged in a glass reactor purged with nitrogen and slurried with 0.8L of hexane at 50°C.

Then, EthylAcetate was carefully added dropwise (in 10 minutes) in such an amount to have a molar ratio of 1.7 between Mg of the prepolymerised catalyst and the organic Lewis base.

The slurry was kept under stirring for 2h still having 50°C as internal temperature.

After that the stirring was stopped and the solid was allowed to settle. One single hexane wash was performed at room temperature before recovering and drying the final catalyst.

Example 1

Polymerization

13.3 g/h of the solid catalyst prepared as described above with a molar feed ratio of electron donor/Ti of 8, were fed using 5 kg/h of liquid propane to a first stirred precontacting vessel, into which also triisobuthyllaluminum (TIBA), diethylaluminumchloride (DEAC) and the electron donor tetrahydrofurane (THF) were dosed. The weight ratio between trisiobutylaluminum and diethylaluminumchloride was 7:1. The ratio between aluminum alkyls (TIBA + DEAC) to the solid catalyst was 5:1. The weight ratio of alkyls to THF was 70. The first precontacting vessel was kept at 50°C with an average residence time of 30 minutes. The catalyst suspension of the first precontacting vessel was continuously transferred to a second stirred precontacting vessel, which was operated with an average residence time of 30 minutes and kept also at 50°C. The catalyst suspension was then transferred continuously to fluidized-bed reactor (FBR) (1) via line (10).

In the first reactor ethylene was polymerized using H2 as molecular weight regulator and in the presence of propane as inert diluent. 50 kg/h of ethylene and 200 g/h of hydrogen were fed to the first reactor via line 9. No comonomer was fed to the first reactor.

The polymerization was carried out at a temperature of 80°C and at a pressure of 2.9 MPa. The polymer obtained in the first reactor was discontinuously discharged via line 11, separated from the gas into the gas/solid separator 12, and reintroduced into the second gas-phase reactor via line 14.

The polymer produced in the first reactor had a melt index MIE of about 75 g/10 min and a density of 0.969 kg/dm$^3$.

The second reactor was operated under polymerization conditions of about 80°C, and a pressure of 2.5 MPa. The riser has an internal diameter of 200 mm and a length of 19 m. The downcomer has a total length of 18 m, an upper part of 5 m with an internal diameter of 300 mm and a lower part of 13 m with an internal diameter of 150 mm.

In order to broaden the molecular weight distribution of the final ethylene polymer, the second reactor was operated by establishing different conditions of monomers and hydrogen concentration within the riser 32 and the downcomer 33. This is achieved by feeding via line 52, 330 kg/h of a liquid stream (liquid barrier) into the upper part of the downcomer 33. Said liquid stream has a composition different from that of the gas mixture present in the riser. Said different concentrations of monomers and hydrogen within the riser, the downcomer of the second reactor and the composition of the liquid barrier are indicated in Table 1. The liquid stream of line 52 comes from the condensation step in the condenser 49, at working conditions of 48°C and 2.5 MPa, wherein a part of the recycle stream is cooled and partially condensed.

As shown in the figure, a separating vessel and a pump are placed, in the order, downstream the condenser 49.

The monomers to the downcomer were fed in 3 positions (lines 46). In dosing point 1, located just below the barrier, 14 kg/h of ethylene and 1.70 kg/h of 1-hexene were introduced. In dosing point 2, located 2.3 meters below dosing point 1, 3 kg/h of ethylene were introduced. In dosing point 3, located 4 meters below dosing point 2, 3 kg/h of ethylene were introduced. In each of the 3 dosing points, a liquid taken from stream 52 was additionally fed in ratio to ethylene of 1:1. 5 kg/h of propane, 31.4 kg/h of ethylene and 30 g/h of hydrogen were fed through line 45 into the recycling system.

The final polymer was discontinuously discharged via line 54.

The polymerization process in the second reactor produced relatively high molecular weight polyethylene fractions. In Table 1 the properties of the final product are specified. It can be seen that the melt index of the final product is decreased as compared to the ethylene resin produced in the first reactor, showing the formation of high molecular weight fractions in the second reactor.

The first reactor produced around 48 % by weight (split wt %) of the total amount of the final polyethylene resin produced by both first and second reactors.

The comonomer (hexene-1) amount was of about 1.5% by weight.

Comparative Example 1

The polymer of this comparative example is a polyethylene composition composition produced with a chromium catalyst in a slurry loop process and which contains less than 1.5% hexene as comonomer in the final resin, sold by LyondellBasell with trademark LP 5021 DX.

Comparative Example 2

The polymer of this comparative example is a polyethylene composition produced in the presence of a Ziegler-Natta catalyst in a slurry Hostalen process with stirred tank reactor and which contains less than 1.5% butene as comonomer in the final resin, sold by LyondellBasell with trademark HS GF 4750.

Table 1

|  | Ex. 1 | Comp. 1 | Comp. 2 |
|---|---|---|---|
| Operative conditions first reactor |  |  |  |
| $H_2/C_2H_4$ Molar ratio | 2.6 | - | - |
| $C_2H_4$% | 11.8 | - | - |
| Density of A) (g/cm$^3$) | 0.969 |  |  |
| MIE [2.16 kg] of A) (g/10 min.) | 75 |  |  |
| Split (wt.%) | 48 | - | - |
|  |  |  |  |
| Operative conditions second reactor |  |  |  |
| $H_2/C_2H_4$ Molar ratio riser | 0.28 | - | - |
| $C_2H_4$% riser | 12.6 | - | - |
| $C_6H_{12}$ %riser | 0.72 | - | - |
| $H_2/C_2H_4$ Molar ratio downcomer | 0.09 | - | - |
| $C_2H_4$% downcomer | 4.7 | - | - |
| $C_6H_{12}$ % downcomer | 0.79 | - | - |
| $H_2/C_2H_4$ Molar ratio barrier | 0.036 | - | - |
| $C_2H_4$% barrier | 7.2 | - | - |
| $C_6H_{12}$ % barrier | 1.38 | - | - |
|  |  |  |  |
| Final Polymer properties |  |  |  |
| MIP [5 kg] (g/10 min.) | 1.62 | 1.18 | 1.51 |
| MIF [21.6 kg] (g/10 min.) | 32 | 21.6 | 30.1 |
| MIF/MIP | 19.8 | 18.3 | 19.9 |
| Density (g/cm$^3$) | 0.9504 | 0.949 | 0.951 |
| Swell ratio (%) | 193 | 229 | 196 |
| Mw (g/mol) | 241492 | 211119 | 246836 |
| Mz (g/mol) | 1339300 | 1336160 | 1481280 |

(continued)

|  | Ex. 1 | Comp. 1 | Comp. 2 |
|---|---|---|---|
| Mw/Mn | 20.51 | 11.97 | 21.69 |
| LCBI | 0.64 | 0.96 | 0.76 |
| Comonomer content IR (% by weight) | 1.5 | 1.5 ($C_6H_{12}$) | 1.5 ($C_4H_8$) |
| $\eta_{0.02}$ | 44,552 | 59,102 | 74,984 |
| ($\eta_{0.02}$/1000)/LCBI | 69.6 | 61.6 | 98.7 |
| AZK -30°C (kJ/m$^2$) | 83.5 | 97.9 | 83.3 |
| Charpy aCN, T = -30°C (kJ/m$^2$) | 4.8 | 6.3 | 5 |
| Belltest at 50°C | > 1500 | 89 | 409 |
| FNCT* 4 MPa/80°C (hours) | 12 | 5 | 6.5 |
| FNCT* 6 MPa/50°C (hours) | 195 | 22 | 44 |
| Sum Gels/m$^2$ >700 $\mu$m | 0.0 | 2.0 | 0.0 |
| Sum Gels/m$^2$ total | 384 | 1,245 | 2,554 |
| HMW COPO Index | 2.4 | 3.6 | 6.7 |
| Notes : $C_2H_4$ = ethylene; $C_6H_{12}$ = hexene; $C_4H_8$ = butene; *aqueous solution of 2% Arkopal N100 | | | |

**Claims**

1. A polyethylene composition having the following features:

1) density from 0.948 to 0.952 g/cm$^3$, preferably 0.948 to 0.951 g/cm$^3$, determined according to ISO 1183-1 at 23°C;
2) ratio MIF/MIP from 12 to 25 in particular from 15 to 22, where MIF is the melt flow index at 190°C with a load of 21.60 kg, and MIP is the melt flow index at 190°C with a load of 5 kg, both determined according to ISO 1133;
3) MIF from 18 to 40 g/10 min., preferably from 20 to 40 g/10 min.;
4) Mz equal to or greater than 1,200,000 g/mol, in particular from 1,200,000 to 2,000,000 g/mol, where Mz is the z-average molecular weight, measured by GPC;
5) $\eta_{0.02}$ from 35,000 to 55,000 Pa.s, preferably from 38,000 to 55,000 Pa.s., more preferably from 40,000 to 50,000 Pa.s.;wherein $\eta_{0.02}$ is the complex shear viscosity at an angular frequency of 0.02 rad/s, measured with dynamic oscillatory shear in a plate-plate rotational rheometer at a temperature of 190°C;
6) long-chain branching index, LCBI, equal to or greater than 0.55, preferably equal to or greater than 0.60, wherein LCBI is the ratio of the measured mean-square radius of gyration $R_g$, measured by GPC-MALLS, to the mean-square radius of gyration for a linear PE having the same molecular weight;
7) ratio ($\eta_{0.02}$/1000)/ LCBI, which is between $\eta_{0.02}$ divided by 1000 and LCBI, from 55 to 75, preferably from 55 to 72.

2. The polyethylene composition of claim 1, consisting of or comprising one or more ethylene copolymers.

3. The polyethylene composition of claims 1 or 2, obtainable by using a Ziegler-Natta polymerization catalyst.

4. The polyethylene composition of claim 3, wherein the Ziegler-Natta polymerization catalyst comprises the product of reaction of:

a) a solid catalyst component comprising a Ti compound supported on MgCl$_2$, said component being obtained by contacting the titanium compound with the MgCl$_2$, or a precursor Mg compound, optionally in the presence of an inert medium, thus obtaining an intermediate product a'), then subjecting a') to prepolymerization and contact with an electron donor compound;

b) an organo-Al compound; and optionally
c) an external electron donor compound.

5. The polyethylene composition of claim 1, having the following additional feature:

- HMWcopo index from 1 to 15;
wherein the HMWcopo index is determined according to the following formula:

$$HMWcopo = (\eta_{0.02} \times t_{maxDSC})/(10\text{^}5)$$

where $\eta_{0.02}$ is the complex viscosity of the melt in Pa.s, measured at a temperature of 190°C, in a parallel-plate (or so-called plate-plate) rheometer under dynamic oscillatory shear mode with an applied angular frequency of 0.02 rad/s; the tmaxDSC is the time, in minutes, required to reach the maximum value of heat flow (in mW) of crystallization (time at which the maximum crystallization rate is achieved, equivalent to the tl/2 crystallization half-time) at a temperature of 124 °C under quiescent conditions, measured in isothermal mode in a differential scanning calorimetry apparatus, DSC; LCBI is the ratio of the measured mean-square radius of gyration Rg, measured by GPC-MALLS, to the mean-square radius of gyration for a linear PE having the same molecular weight at a mol. weight of 1,000,000 g/mol.

6. The polyethylene composition of claim 1, comprising:

A) 30 - 70% by weight, preferably 40 - 60% by weight of an ethylene homopolymer or copolymer (the homopolymer being preferred) with density equal to or greater than 0.960 g/cm$^3$ and melt flow index MIE at 190°C with a load of 2.16 kg, according to ISO 1133-1, of 40 g/10 min. or higher, preferably of 50 g/10 min. or higher;
B) 30 - 70% by weight, preferably 40 - 60% by weight of an ethylene copolymer having a MIE value lower than the MIE value of A), preferably lower than 0.5 g/10 min.

7. Manufactured articles comprising the polyethylene composition of claim 1.

8. Manufactured articles according to claim 7, in form of blow-molded articles.

9. Process for preparing the polyethylene composition of claim 1, wherein all the polymerization steps are carried out in the presence of a Ziegler-Natta polymerization catalyst supported on MgCl$_2$.

10. The process of claim 9, comprising the following steps, in any mutual order:

a) polymerizing ethylene, optionally together with one or more comonomers, in a gas-phase reactor in the presence of hydrogen;
b) copolymerizing ethylene with one or more comonomers in another gas-phase reactor in the presence of an amount of hydrogen less than step a);

where in at least one of said gas-phase reactors the growing polymer particles flow upward through a first polymerization zone under fast fluidization or transport conditions, leave said riser and enter a second polymerization zone through which they flow downward under the action of gravity, leave said second polymerization zone and are reintroduced into the first polymerization zone, thus establishing a circulation of polymer between said two polymerization zones

**Patentansprüche**

1. Polyethylenzusammensetzung mit den folgenden Merkmalen:

1) Dichte von 0,948 bis 0,952 g/cm$^3$, vorzugsweise von 0,948 bis 0,951 g/cm$^3$, bestimmt gemäß ISO 1183-1 bei 23 °C;
2) Verhältnis MIF/MIP von 12 bis 25, insbesondere 15 bis 22, wobei MIF der Schmelzflussindex bei 190 °C unter einer Last von 21,60 kg ist, und MIP der Schmelzflussindex bei 190 °C unter einer Last von 5 kg ist, wobei beide gemäß ISO 1133 bestimmt werden;

3) MIF von 18 bis 40 g/10 min., vorzugsweise von 20 bis 40 g/10 min.;

4) Mz gleich oder größer als 1.200.000, insbesondere 1.200.000 bis 2.000.000 g/mol, wobei Mz das z-Mittel des Molekulargewichts ist, gemessen mittels GPC;

5) $\eta_{0,02}$ von 35.000 bis 55.000 Pa·s, vorzugsweise von 38.000 bis 55.000 Pa·s, bevorzugter von 40.000 bis 50.000 Pa·s, wobei $\eta_{0,02}$ die komplexe Scherviskosität bei einer Kreisfrequenz von 0,02 rad/s ist, gemessen mit dynamischer oszillierender Scherung in einem Platte-Platte-Rotationsrheometer bei einer Temperatur von 190 °C;

6) langkettiger Verzweigungsindex, LCBI, gleich oder größer als 0,55, vorzugsweise gleich oder größer als 0,60, wobei LCBI das Verhältnis des gemessenen mittleren quadratischen Trägheitsradius $R_g$, gemessen mittels GPC-MALLS, zu dem mittleren quadratischen Trägheitsradius für ein lineares PE mit demselben Molekularge-wicht ist;

7) Verhältnis ($\eta_{0,02}$/1000)/LCBI, das zwischen $\eta_{0,02}$, geteilt durch 1000, und LCBI ist, von 55 bis 75, vorzugsweise von 55 bis 72.

2. Polyethylenzusammensetzung nach Anspruch 1, die aus einem oder mehreren Ethylencopolymeren besteht oder diese umfasst.

3. Polyethylenzusammensetzung nach Anspruch 1 oder 2, die unter Verwendung eines Ziegler-Natta-Polymerisationskatalysators erhältlich ist.

4. Polyethylenzusammensetzung nach Anspruch 3, wobei der Ziegler-Natta-Polymerisationskatalysator das Reaktionsprodukt von Folgenden umfasst:

a) einer festen Katalysatorkomponente, die eine Ti-Verbindung, geträgert auf $MgCl_2$, umfasst, wobei die Komponente erhalten wird, indem die Titanverbindung mit dem $MgCl_2$ oder einer Vorläufer-Mg-Verbindung kontaktiert wird, gegebenenfalls in Anwesenheit eines inerten Mediums, wodurch ein Zwischenprodukt a') erhalten wird, dann a') Präpolymerisation und Kontakt mit einer Elektronendonorverbindung unterzogen wird;
b) einer Organo-Al-Verbindung; und gegebenenfalls
c) einer externen Elektronendonorverbindung.

5. Polyethylenzusammensetzung nach Anspruch 1 mit den folgenden zusätzlichen Merkmalen:

- HMWcopo-Index von 1 bis 15;
wobei der HMWcopo-Index gemäß der folgenden Formel bestimmt wird:

$$HMWcopo = (\eta_{0,02} \times t_{maxDSC})/(10^{\wedge}5)$$

wobei $\eta_{0,02}$ die komplexe Viskosität der Schmelze in Pa·s ist, gemessen bei einer Temperatur von 190 °C in einem Parallelplattenrheometer (oder so genanntem Platte-Platte-Rheometer) unter dynamischem oszillierendem Schermodus mit einer angelegten Kreisfrequenz von 0,02 rad/s; wobei $t_{maxDSC}$ die Zeit in Minuten ist, die erforderlich ist, um den Maximalwert des Wärmeflusses (in mW) der Kristallisation (Zeit, bei der die maximale Kristallisationsrate erreicht wird, entsprechend der t1/2 Halbwertszeit der Kristallisation) bei einer Temperatur von 124 °C unter ruhenden Bedingungen zu erreichen, gemessen im isothermen Modus in einem Apparat für Differentialscanningkalorimetrie, DSC; wobei LCBI das Verhältnis des gemessenen mittleren quadratischen Trägheitsradius $R_g$, gemessen mittels GPC-MALLS, zu dem mittleren quadratischen Trägheitsradius für ein lineares PE mit demselben Molekulargewicht mit einem Molekulargewicht von 1.000.000 g/mol ist.

6. Polyethylenzusammensetzung nach Anspruch 1, umfassend:

A) 30 bis 70 Gew.%, vorzugsweise 40 bis 60 Gew.% eines Ethylenhomopolymers oder -copolymers (wobei das Homopolymer bevorzugt ist) mit einer Dichte gleich oder größer als 0,960 $g/cm^3$ und einem Schmelzflus-sindex MIE bei 190 °C unter einer Last von 2,16 kg gemäß ISO 1133-1 von 40 g/10 Min oder höher, vorzugsweise 50 g/10 min oder höher;
B) 30 bis 70 Gew.%, vorzugsweise 40 bis 60 Gew.% eines Ethylencopolymers mit einem MIE-Wert, der unter dem MIE-Wert von A) liegt, vorzugsweise unter 0,5 g/10 min.

7. Fertigungsartikel, umfassend die Polyethylenzusammensetzung nach Anspruch 1.

8. Fertigungsartikel nach Anspruch 7 in Form von blasgeformten Artikeln.

9. Verfahren zur Herstellung der Polyethylenzusammensetzung nach Anspruch 1, wobei alle der Polymerisationsschritte in Gegenwart eines auf $MgCl_2$ geträgerten Ziegler-Natta-Polymerisationskatalysators durchgeführt werden.

10. Verfahren nach Anspruch 9, umfassend die folgenden Schritte in jeder Reihenfolge zueinander:

a) Polymerisieren von Ethylen, gegebenenfalls zusammen mit einem oder mehreren Comonomeren, in einem Gasphasenreaktor in Gegenwart von Wasserstoff;
b) Copolymerisieren von Ethylen mit einem oder mehreren Comonomeren in einem anderen Gasphasenreaktor in Gegenwart einer Menge an Wasserstoff, die kleiner als in Schritt a) ist;
wobei in mindestens einem der Gasphasenreaktoren die wachsenden Polymerpartikel durch eine erste Polymerisationszone unter raschen Verwirbelungs- oder Transportbedingungen aufwärts fließen, das Steigrohr verlassen und in eine zweite Polymerisationszone eintreten, durch die hindurch sie unter Einwirkung der Schwerkraft abwärts fließen, die zweite Polymerisationszone verlassen und erneut in die erste Polymerisationszone eingebracht werden, wodurch eine Zirkulation von Polymer zwischen den beiden Polymerisationszonen eingerichtet wird.

**Revendications**

1. Composition de polyéthylène présentant les caractéristiques suivantes :

1) densité de 0,948 à 0,952 g/cm$^3$, préférablement de 0,948 à 0,951 g/cm$^3$, déterminée selon la norme ISO 1183-1 à 23°C ;
2) rapport MIF/MIP de 12 à 25, en particulier de 15 à 22, où MIF est l'indice de fluidité à chaud à 190°C sous une charge de 21,60 kg et MIP est l'indice de fluidité à chaud à 190°C sous une charge de 5 kg, tous deux déterminés selon la norme ISO 1133 ;
3) MIF de 18 à 40 /10 min., préférablement de 20 à 40 g/10 min. ;
4) Mz égal ou supérieur à 1.200.000 g/mole, en particulier de 1.200.000 à 2.000.000 g/mole, Mz étant le poids moléculaire moyen Z, mesuré par CPG ;
5) $\eta_{0,02}$ de 35.000 à 55.000 Pa.s, préférablement de 38.000 à 55.000 Pa.s., plus préférablement de 40.000 à 50.000 Pa.s. ; $\eta_{0,02}$ étant la viscosité de cisaillement complexe à une fréquence angulaire de 0,02 rad/s, mesurée sous un cisaillement oscillatoire dynamique dans un rhéomètre rotatif plaque-plaque à une température de 190 °C ;
6) indice de ramification à longue chaîne, LCBI, égal ou supérieur à 0,55, préférablement égal ou supérieur à 0,60, LCBI étant le rapport du rayon de giration quadratique moyen mesuré $R_g$, mesuré par GPC-MALLS, au rayon de giration quadratique moyen pour un PE linéaire présentant le même poids moléculaire ;
7) rapport ($\eta_{0,02}$/1000)/LCBI, qui est le rapport entre $\eta_{0,02}$ divisé par 1000 et LCBI, de 55 à 75, préférablement de 55 à 72.

2. Composition de polyéthylène selon la revendication 1, constituée par ou comprenant un ou plusieurs copolymères d'éthylène.

3. Composition de polyéthylène selon la revendication 1 ou 2, pouvant être obtenue à l'aide d'un catalyseur de polymérisation Ziegler-Natta.

4. Composition de polyéthylène selon la revendication 3, le catalyseur de polymérisation Ziegler-Natta comprenant le produit de réaction de :

a) un constituant catalytique solide comprenant un composé à base de Ti supporté sur $MgCl_2$, ledit constituant étant obtenu par mise en contact du composé à base de titane avec le $MgCl_2$ ou avec un composé précurseur à base de Mg, éventuellement en présence d'un milieu inerte, ce qui permet d'obtenir un produit intermédiaire a'), puis par soumission de a') à une prépolymérisation et à un contact avec un composé donneur d'électrons ;
b) un composé d'organo-Al ; et éventuellement
c) un composé donneur d'électrons externe.

5. Composition de polyéthylène selon la revendication 1, présentant la caractéristique supplémentaire suivante :

indice HMWcopo de 1 à 15 ;
l'indice HMWcopo étant déterminé selon la formule suivante :

$$HMWcopo = (\eta_{0,02} \times t_{maxDSC})/(10^5)$$

où $\eta_{0,02}$ est la viscosité complexe de la masse fondue en Pa.s, mesurée à une température de 190°C, dans un rhéomètre à plaques parallèles (ou appelé plaque-plaque) dans un mode de cisaillement oscillatoire dynamique à une fréquence angulaire appliquée de 0,02 rad/s ; $t_{maxDSC}$ est le temps en minutes requis pour atteindre la valeur maximale du flux de chaleur (en mW) de cristallisation (temps auquel le taux de cristallisation maximal est obtenu, équivalent au demi-temps de cristallisation t1/2) à une température de 124°C dans des conditions de repos, mesuré en mode isotherme dans un appareil de calorimétrie différentielle à balayage, DSC ; LCBI est le rapport du rayon de giration quadratique moyen mesuré Rg, mesuré par GPC-MALLS, au rayon de giration quadratique moyen pour un PE linéaire présentant le même poids moléculaire à un poids moléculaire de 1.000.000 g/mole.

6. Composition de polyéthylène selon la revendication 1, comprenant :

A) 30 à 70% en poids, préférablement 40 à 60% en poids d'un homopolymère ou copolymère d'éthylène (l'homopolymère étant préféré) présentant une densité égale ou supérieure à 0,960 g/cm$^3$ et un indice de fluidité à chaud MIE à 190°C sous une charge de 2,16 kg, selon la norme ISO 1133-1, de 40 g/10 min ; ou plus, préférablement de 50 g/10 min. ou plus ;
B) 30 à 70% en poids, préférablement 40 à 60% en poids d'un copolymère d'éthylène présentant une valeur MIE inférieure à la valeur MIE de A), préférablement inférieure à 0,5 g/10 min.

7. Articles fabriqués comprenant la composition de polyéthylène selon la revendication 1.

8. Articles fabriqués selon la revendication 7, sous la forme d'articles moulés par soufflage.

9. Procédé de préparation de la composition de polyéthylène selon la revendication 1, toutes les étapes de polymérisation étant réalisées en présence d'un catalyseur de polymérisation Ziegler-Natta supporté sur MgCl$_2$.

10. Procédé selon la revendication 9, comprenant les étapes suivantes, dans n'importe quel ordre mutuel :

a) polymérisation d'éthylène, éventuellement conjointement avec un ou plusieurs comonomères, dans un réacteur à phase gazeuse en présence d'hydrogène ;
b) copolymérisation d'éthylène avec un ou plusieurs comonomères dans un autre réacteur à phase gazeuse en présence d'une quantité d'hydrogène inférieure à celle de l'étape a) ;
où, dans au moins l'un desdits réacteurs à phase gazeuse, les particules polymères en croissance s'écoulent vers le haut à travers une première zone de polymérisation dans des conditions de fluidisation ou de transport rapides, quittent ladite colonne ascendante et pénètrent dans une deuxième zone de polymérisation à travers laquelle elles s'écoulent vers le bas sous l'action de la gravité, quittent ladite deuxième zone de polymérisation et sont réintroduites dans la première zone de polymérisation, établissant ainsi une circulation de polymère entre lesdites deux zones de polymérisation

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009003627 A
- US 20140243475 A
- WO 2014206854 A
- US 4298718 A
- US 4495338 A
- US 4469648 A
- US 4399054 A
- WO 9844009 A
- US 5100849 A
- US 4829034 A
- EP 395083 A
- WO 2005019280 A

**Non-patent literature cited in the description**

- **D. GELDART.** Gas Fluidisation Technology. J. Wiley & Sons Ltd, 1986, vol. 155
- **BENOIT H. ; REMPP P. ; GRUBISIC Z.** *J. Polymer Sci., Phys. Ed.,* 1967, vol. 5, 753
- **ZIMM BH ; STOCKMAYER WH.** The dimensions of chain molecules containing branches and rings. *J Chem Phys,* 1949, 17
- **RUBINSTEIN M. ; COLBY RH.** Polymer Physics. Oxford University Press, 2003